# EUROPÄISCHE PATENTSCHRIFT

(11) **EP 1 366 265 B1**
(45) Veröffentlichungstag und Bekanntmachung des Hinweises auf die Patenterteilung: **20.10.2004**
(21) Anmeldenummer: 03706456.5
(22) Anmeldetag: 07.02.2003
(51) Int. Cl.: E06B 9/24, G05D 25/02, G02F 1/133

(54) **FENSTERELEMENT**
WINDOW ELEMENT
ELEMENT DE FENETRE

(30) Priorität: 09.02.2002 DE 10205405
(43) Veröffentlichungstag der Anmeldung: 03.12.2003
(73) Patentinhaber: Emde, Thomas, 60389 Frankfurt/Main (DE)
(72) Erfinder: Emde, Thomas, 60389 Frankfurt/Main (DE)
(74) Vertreter: Fritz, Edmund Lothar, Dipl.-Chem.
(86) Internationale Anmeldenummer: PCT/EP2003/001236
(87) Internationale Veröffentlichungsnummer: WO 2003/067014

(56) Entgegenhaltungen:
- DE-A- 3 822 796
- DE-A- 4 228 927
- DE-A- 19 922 973

## Beschreibung

Die vorliegende Erfindung betrifft ein Fensterelement umfassend wenigstens ein mindestens zeitweise lichtdurchlässiges plattenförmiges Element und wenigstens eine zur Wiedergabe von Bildern bestimmte Fläche (Display) nach dem Oberbegriff des Anspruchs 1.

Nach dem Stand der Technik sind herkömmliche Bildschirme (Informationsträger) separate Gegenstände, auf denen die Bildwiedergabe nach dem Prinzip der Elektronenstrahlröhre erfolgt. In jüngerer Zeit werden zunehmend Flachbildschirme verwendet, die weniger Platz beanspruchen und eleganter erscheinen als herkömmliche Monitore. Jedoch sind auch diese Flachbildschirme separate Gegenstände.

In der DE 101 31 598 C1, die am 29.06.2001 angemeldet wurde, gegenüber der vorliegenden Anmeldung jedoch nicht vorveröffentlicht ist, wird beschrieben, einen Sonnenschutz quasi als Display zu nutzen, indem man die Behangfläche mit organischen Leuchtdioden (OLED) versieht und diese über eine Steuerelektronik ansteuert, um so ein Bild auf dem Sonnenschutzbehang zu erzeugen. Der Sonnenschutzbehang ist jedoch nicht durchsichtig, sondern dient vielmehr dem Zweck, einen Innenraum gegen Sonneneinstrahlung abzuschirmen. Es handelt sich also um einen Sichtschutz in Form einer Markise, eines Lamellenpakets, eines Rollos, eines Rolladen oder dergleichen. Man kann also nur entweder den Sonnenschutz herunterziehen oder vorziehen und danach zur Betrachtung von Bildern als Display nutzen, oder man zieht den Sonnenschutzbehang hoch oder zur Seite und kann dann, wenn dieser sich vor einem Fenster befindet, durch das Fenster hinausschauen. Dann ist jedoch der Bildschirm nicht mehr sichtbar und nutzbar. Bei dieser Idee wird also in jedem Fall ein additives Element verwendet, welches der Sonnenschutzbehang darstellt, um das Betrachten von Bildern zu ermöglichen. Dies hat den Nachteil, dass der Benutzer das additive Element anschaffen muss und dass er dieses additive Element herunterziehen beziehungsweise vorziehen muss, um es als Bildschirm zu nutzen.

Es ist auch bereits bekannt, Glasscheiben, die entweder frei im Raum aufgehängt sind oder Teile von Fenstern oder Schaufenstern sind, mit einer speziellen Prismenfolie zu beschichten, um dann Bilder auf diese Glasscheiben zu projizieren. Dazu wird jedoch ein separater Projektor benötigt. Dies bedeutet, das Bild wird durch den Projektor erzeugt und nicht im Display oder in unmittelbarer Nähe zum Display wie bei einem Flachbildschirm. Bei diesem Verfahren schwebt das projizierte Bild quasi auf der Glasscheibe. Die durch die Projektion entstehende Verzerrung ist auszugleichen.

Die DE 42 28 927 A1 betrifft eine Anordnung zur rechnergesteuerten Kontrolle der Lokalisation, Intensität und der Farbtönung des Lichtdurchtritts durch transparente, großflächige Objekte wie Fenster und dergleichen. Dabei wird auf die Oberfläche eines transparenten Objekts mindestens eine Matrix-Schicht eines rechnergesteuerten, passiven transparenten, optoelektronischen Wandlers aufgebracht. Dadurch ist es möglich, lokal die Lichtintensität zu reduzieren oder die Farbtönung des durchtretenden Lichts bei großflächigen transparenten Objekten zu verändern. Die hierbei eingesetzten passiven Wandlersysteme sind vergleichsweise großflächig im Bereich von mehreren Quadratzentimetern bis zu mehreren hundert Quadratzentimetern pro Wandlerelement, da es nicht darum geht, ein Bild mit einer besonders guten Auflösung zu erzielen.

Ausgehend von diesem Stand der Technik besteht die Aufgabe der vorliegenden Erfindung darin, ein Fensterelement zur Verfügung zu stellen, welches einerseits bei Bedarf in einer Funktion als Fenster dient und somit weitgehend transparent ist und welches in einer anderen Funktion alternativ dazu für die Wiedergabe von Bildelementen als Display dienen kann, ohne dass dazu jedoch eine Projektionseinrichtung benötigt wird.

Die Lösung dieser Aufgabe liefert ein erfindungsgemäßes Fensterelement der eingangs genannten Gattung mit den kennzeichnenden Merkmalen des Hauptanspruchs.

Erfindungsgemäß ist vorgesehen, dass das plattenförmige Element bzw. wenigstens ein plattenförmiges Element eines Fensterelements wenigstens ein projektorunabhängig bilderzeugendes Display umfasst, welches Teil des plattenförmigen Elements ist, wobei in einem ersten Zustand bei eingeschaltetem Display eine Wiedergabe von Bildelementen auf dem plattenförmigen Element erfolgt und in einem zweiten Zustand bei ausgeschaltetem Display mindestens teilweise eine Durchsicht durch das plattenförmige Element hindurch möglich ist.

Erfindungsgemäß erzeugt somit das Display selbst Bildelemente, bzw. diese werden im Display erzeugt und nicht mittels eines Projektors oder dergleichen lediglich auf eine Wiedergabefläche projiziert.

Die vorliegende Erfindung löst sich also von dem Gedanken, ein additives Element zu verwenden, welches dann als Display dient. Vielmehr wird ein Fensterelement, welches auch bereits vorhanden sein kann, selbst als Display benutzt. Wenn es sich um ein Fensterelement handelt, welches Teil eines Fensters im eigentlichen Sinn ist, ist das Fensterelement also schon vorhanden und erfüllt im zweiten Zustand bei ausgeschaltetem Display seine gewöhnliche Fensterfunktion, das heißt man kann durch dieses hindurchschauen. Der Betrachter nimmt unter Umständen nicht bewusst wahr, dass es sich um ein Display handelt. Soll das Fensterelement als Display benutzt werden, genügt es, das Display quasi "einzuschalten", das heißt in einen eingeschalteten Zustand zu überführen, in dem es selbsttätig Bilder wiedergibt, das heißt ohne dass zusätzlich ein Projektor notwendig ist.

Es sei an dieser Stelle betont, dass unter einem Fensterelement gemäß der vorliegenden Erfindung nicht ausschließlich zu verstehen ist, dass dieses Teil eines Fensters ist. Vielmehr können zahlreiche andere Objekte in Betracht kommen, die wenigstens ein Fensterelement gemäß der vorliegenden Erfindung aufweisen. Ein erfindungsgemäßes Fensterelement kann in eine Fassade, Wand, Decke oder ein Dach eines Gebäudes eingebaut sein. In diesem Fall bildet das Fensterelement ein Fenster oder einen Teil eines Fensters im weitesten Sinne. Das Fensterelement kann aber ebenso gut im Innenbereich eines Gebäudes eingebaut sein, beispielsweise als Teil einer Trennwand oder einer Tür oder einer Treppe oder eines Aufzugs, einer Rolltreppe, eines Geländers, zum Beispiel eines Geländers einer Rolltreppe oder eines Laufbandes. Auch in diesem Fall besteht der Vorteil, dass die im gewöhnlichen Zustand, das heißt bei ausgeschaltetem Display, transparenten Objekte oder mindestens im Bereich des Fensterelements transparenten Objekte ihre eigentliche herkömmliche Funktion erfüllen, beispielsweise die Funktion einer durchsichtigen Trennwand öder Tür oder die eines durchsichtigen Aufzugs (gläserner Aufzug), eines durchsichtigen Geländers (gläsernes Geländer) und so fort. Das Besondere an der erfindungsgemäßen Idee besteht also darin, dass ein in einem gewöhnlichen Zustand durchsichtiges oder in Teilbereichen durchsichtiges Objekt einerseits seine bisherige Funktion beibehält, in einem zweiten Zustand aber selbst zum Bildschirm wird, ohne dass man an dem Objekt Veränderungen vornehmen muss (außer der Änderung des Schaltzustands) und ohne dass ein additives Element notwendig wird, wie bei dem eingangs zitierten Stand der Technik. Der große Vorteil dabei besteht darin, dass bereits eine transparente Schicht des Objekts vorhanden ist, die als Träger für Displayelemente wie beispielsweise OLED's oder dergleichen genutzt werden kann.

Ein Fensterelement im Sinne der vorliegenden Erfindung kann beispielsweise auch Teil eines Möbelstücks, eines Stadtraummöbels, eines Gartenmöbels oder dergleichen sein. Auch bei dieser Variante nutzt man wiederum die Tatsache, dass das Objekt selbst in einem gewöhnlichen Zustand bereits mindestens in Teilbereichen transparent ist und zunächst seine herkömmliche Funktion erfüllt. Das Objekt kann beispielsweise ein Glastisch sein oder ein Tisch aus einem anderen Material mit einer eingebauten Glasplatte. Das Objekt kann auch ein gläserner Schrank oder teilweise gläserner Schrank sein und so weiter. Ein solcher Tisch mit einer Glasplatte kann also wie ein herkömmlicher Glastisch genutzt werden. Dadurch dass die Glasplatte oder ein Teil davon durch ein erfindungsgemäßes Fensterelement gebildet wird, kann der Tisch aber auch im Bereich des Fensterelements als Display genutzt werden. Dies macht es beispielsweise möglich, dass eine an einem solchen Glastisch sitzende Person irgendeiner beliebigen Verrichtung nachgeht, beispielsweise eine Mahlzeit einnimmt und dabei gleichzeitig den Bereich des Glastischs, der als Fensterelement im Sinne der Erfindung ausgebildet ist, dies kann auch der ganze Glastisch sein, zur Betrachtung von Bildern nutzt, beispielsweise wie bei einem Fernseher oder auch als Computerbildschirm. Es wird also kein additiver Bildschirm mehr benötigt. Weiterhin ist erfindungsgemäß auch vorteilhaft, dass die sonst für die Bilderzeugung notwendigen Elemente und/oder Schichten nicht mehr auf eine zusätzliche Trägerschicht aufgebracht werden müssen. Vielmehr kann das Objekt selbst gegebenenfalls als Trägerschicht dienen.

Das genannte Display kann gemäß einer bevorzugten Variante der vorliegenden Erfindung beispielsweise ein auf das plattenförmige Element aufgebrachtes oder in dem plattenförmigen Element untergebrachtes vorzugsweise in sich flexibles Flachdisplay sein. Das plattenförmige Element ist gemäß einer ersten einfachen Variante der Erfindung eine Platte vorzugsweise aus Glas oder Kunststoffglas, auf die einseitig ein flexibles Flachdisplay flächig aufgebracht ist, z. B. durch Aufkleben, Aufschweißen oder dergleichen. Das plattenförmige Element der Erfindung kann aber auch eine mehrschichtige Verbundplatte sein, wobei auf eine solche Verbundglasplatte einseitig beispielsweise ein flexibles Flachdisplay aufgebracht ist oder ein solches Flachdisplay zwischen zwei Scheiben eines solchen Verbundglases oder einer solchen Verbundkunststoffplatte aufgebracht ist. Gemäß einer weiteren Variante der Erfindung kann das plattenförmige Element auch eine Isolierglasscheibe aus Glas oder Kunststoffglas sein mit mehreren z. B. voneinander beabstandeten Glasscheiben (z. B. Zweifach- oder Dreifachverglasung), wobei vorzugsweise an einer dem Zwischenraum zugewandten Seite einer der Glasscheiben ein flexibles Flachdisplay aufgebracht ist. Bei dieser Anordnung besteht der Vorteil, dass das Flachdisplay gegen mechanische Einflüsse und Witterungseinflüsse geschützt ist, da es sich an einer Innenseite des plattenförmigen Elements befindet. Der gleiche Vorteil besteht bei einer Verbundanordnung eines mehrschichtigen plattenförmigen Elements, bei der ein Flachdisplay innenliegend zwischen zwei Scheiben der Verbundanordnung angeordnet ist.

Für ein erfindungsgemäßes Display geeignet ist z. B. ein Elektrolumineszenz-Display (ELD), welches im ausgeschalteten Zustand überwiegend transparent ist. Außerdem kommen in Betracht Vakuumfluoreszenzdisplays (VFD), Feldemissionsdisplays (FED), PDP (Plasmadisplay), LED oder OLED-Displays. In diesem Fall erlaubt das Display weitgehend
die Durchsicht bzw. den Lichtdurchtritt, so dass das Fensterelement in seiner Fensterfunktion als solches genutzt werden kann und das Display im Prinzip von dem Betrachter gar nicht oder kaum wahrgenommen wird. Im eingeschalteten Zustand des Elektrolumineszenz-Displays wird das Fensterelement hingegen als Bildschirm zur Wiedergabe von Bildelementen zur einen oder anderen Seite hin, also bei einem Fenster eines Gebäudes zum Innenraum hin oder auch zum Außenraum hin genutzt, wobei bei eingeschaltetem Display auf dem plattenförmigen Element die Bildelemente erscheinen und eine Durchsicht nicht oder nur eingeschränkt möglich ist. Diese Nutzung der Displayfunktion bietet sich natürlich vorwiegend bei Dunkelheit an. Bei der erfindungsgemäßen Lösung hat man bereits durch die Displayfunktion des Fensterelements die Möglichkeit einen Sichtschutz nach außen oder nach innen zu schaffen, ohne dass man Jalousien, Rolladen oder ähnliche additive Elemente benötigt.

Geeignete Displays für die erfindungsgemäße Anwendung wurden in jüngster Zeit aus der Fachliteratur bekannt, beispielsweise kommt bei Verwendung von organischen lichtemittierenden Dioden (OLED's) ein mehrschichtiger Aufbau des Displays in Betracht, der eine transparente Elektrode, zum Beispiel aus ITO (Indium Zinn Oxid) und eine Schicht aus einem lichtemittierenden Material, zum Beispiel einem organischen Polymeren, umfasst. Derartige OLED's sind beispielsweise in der DE 100 45 204 A1, die am 13.09.2000 angemeldet wurde und gegenüber der vorliegenden Anmeldung nicht vorveröffentlicht ist, beschrieben. Displays dieser Art werden hier nur beispielhaft genannt, da im Rahmen der vorliegenden Erfindung ebenso gut andersartige bilderzeugende Elemente verwendet werden können.

Eine Weiterbildung der Erfindung sieht vor, dass das Fensterelement weiterhin eine Beleuchtungseinrichtung mit wenigstens einem Leuchtmittel umfasst, welches geeignet ist, Licht stirnseitig in das plattenförmige Element hinein einzustrahlen, wobei das plattenförmige Element an seiner Oberfläche oder in seinem Inneren derart lichtstreuend ausgebildet ist, dass das Licht im wesentlichen senkrecht zu seiner Einstrahlrichtung umgelenkt wird und über die Fläche des plattenförmigen Elements mindestens zu einer Seite hin abgegeben wird. Bei dieser Weiterbildung ermöglicht das Fensterelement eine dritte Funktion, nämlich die Beleuchtungsfunktion, bei der das oder die plattenförmigen Elemente quasi selbstleuchtend erscheinen und Licht nach außen und/oder zu einem Innenraum hin abgeben, wenn es sich z. B. um ein Fensterelement eines Gebäudes handelt. Wenn diese dritte Funktion (Beleuchtungsfunktion) vorhanden ist, bieten sich also folgende Möglichkeiten. Das Fensterelement kann tagsüber im unbeleuchteten Zustand weitgehend transparent sein und den Einfall von Tageslicht z. B. in das innere eines Gebäudes zulassen wie ein herkömmliches Fenster. Bei zunehmender Dunkelheit kann die Beleuchtungsfunktion genutzt werden, wobei die Leuchtmittel eingeschaltet werden und das Fensterelement leuchtend erscheint, wobei die Einsicht in das Gebäude von außen dann in der Regel ebenfalls nicht mehr möglich ist. Dabei wird aber durch die erfindungsgemäße Art der Beleuchtung mit stirnseitigem Einstrahlen von Licht in das plattenförmige Element und Umlenkung, so dass eine Lichtabgabe von Streulicht über die Fläche des Fensterelements erfolgt, erzielt, dass ein konkretes Leuchtmittel für den Betrachter nicht sichtbar ist, sondern das Fensterelement in sich selbstleuchtend erscheint. Schließlich kann die dritte Funktion genutzt werden, in der das Display betrieben wird und das Fensterelement zur flächigen Wiedergabe von Bildelementen dient. Diese dritte Funktion kann man beispielsweise zur Betrachtung von Bildern oder Filmen nutzen. Dies kann beispielsweise von innerhalb des Gebäudes her erfolgen und hat den wesentlichen Vorteil, dass der Betrachter das Fensterelement als Bildschirm nutzt und keinen separaten Bildschirm benötigt. Ein Projektor ist ebenfalls nicht erforderlich ebenso wenig wie eine Leinwand oder ein nach dem Stand der Technik üblicher großflächiger Flachbildschirm. Die bisher bekannten großflächigen Flachbildschirme sind bekanntlich sehr kostenaufwendig. Der Zuschauer betrachtet vielmehr nach der Erfindung beispielsweise einen Film, indem er einfach auf das Fensterelement schaut. Wenn mehrere Fensterelemente dieser Art vorhanden sind, sind somit sowohl der Ort als auch die Größe des Displays, auf dem die Bildbetrachtung erfolgt, variabel. Man kann beispielsweise eine ganze Fassade eines Gebäudes oder Teile davon als Bildschirm nutzen. Die Fassade selbst wird damit zum Bildschirm. Nach Ausschaltung der Displayfunktion kann der Betrachter abends beispielsweise einfach das Fensterelement auf die Funktion "Beleuchtung" schalten. Das Ausschalten der Beleuchtungsfunktion und somit das Umfunktionieren in ein herkömmliches Fensterelement kann durch entsprechende Steuereinrichtungen beispielsweise bei Tagesanbruch selbsttätig erfolgen.

Gemäß einer Weiterbildung der Erfindung ist vorgesehen, dass das Fensterelement vorzugsweise wenigstens eine Rahmenkonstruktion umfasst, die ein plattenförmiges Element oder mehrere im Verbund angeordnete plattenförmige Elemente randseitig einfasst. Dabei ist vorzugsweise vorgesehen, dass die Rahmenkonstruktion die stirnseitig in wenigstens ein plattenförmiges Element einstrahlenden Leuchtmittel in Richtung der Flächennormale der plattenförmigen Elemente gesehen weitgehend abdeckt. Dadurch wird eine Blendwirkung auf den Betrachter verhindert, da die stirnseitig in das plattenförmige Element einstrahlenden Leuchtmittel für den Betrachter nicht unmittelbar einsehbar sind.

Für den Betrieb des Displays sind vorzugsweise Steuereinrichtungen vorhanden, ebenso wie vorzugsweise weiterhin Steuereinrichtungen für die Steuerung der Leuchtmittel vorhanden sind, insbesondere um eine zeitliche und/oder auch eine farbliche Steuerung der Leuchtmittel zu ermöglichen. Dadurch ergeben sich weitere Möglichkeiten, beispielsweise indem die Beleuchtung in farbigem Licht erfolgt, wobei die Farbe veränderlich sein kann. Derartige farbig beleuchtet erscheinende Fensterelemente kann man z. B. für eine optisch ansprechende Gestaltung einer Gebäudefassade nutzen. Geeignete Leuchtmittel, die eine solche farbige Beleuchtung, die gegebenenfalls variiert, in technisch relativ einfacher Weise ermöglichen, sind vorzugsweise Leuchtdioden, beispielsweise LED's oder dergleichen. Derartige Leuchtdioden lassen sich im sogenannten RGB (Rot-Grün-Blau)-Modus anordnen und entsprechend elektronisch ansteuern.

Weitere Steuereinrichtungen für die Leuchtmittel können beispielsweise Bewegungsmelder oder andere Sensoren umfassen für ein Einschalten der Beleuchtung bei Annäherung einer Person oder es kann eine Helligkeitssteuerung vorgesehen sein, abhängig von vorhandenem Tageslicht oder Fremdlicht oder gegebenenfalls eine Dimmfunktion. Außerdem ist es möglich, die Beleuchtungsfunktion nach einem vorgegebenen beliebigen Programm zu schalten, beispielsweise über eine Zeitschaltung mit wiederkehrendem Schaltrhythmus und gegebenenfalls zusätzlichen Schaltvorgängen wie z. B. Urlaubsfunktion, Abwesenheit, Wochenendschaltung und dergleichen.

Ein Fensterelement gemäß der Erfindung kann Teil einer Fassade, einer Wand oder einer Decke eines Gebäudes sein. Das Fensterelement kann auch eine Tür, eine Trennwand oder ein Teil davon sein oder Teil eines Möbelstücks oder eines Stadtraummöbels, z. B. einer Parkbank, oder eines Gartenmöbels.

Eine weitere bevorzugte Variante der Erfindung sieht vor, dass das erfindungsgemäße Display umschaltbar ist, so dass die Bildbetrachtung bei Bedarf wahlweise jeweils von der einen oder anderen Seite des Fensterelements her erfolgen kann. Beispielsweise ist es dann bei Fensterelementen, die in Gebäudewände integriert sind, möglich ein von der Innenseite her zu betrachtendes Bild zu erzeugen, beispielsweise dann, wenn die in dem Gebäude anwesende Person einen Film betrachten möchte. In einem anderen Modus kann man mittels des gleichen Displays auf dem gleichen Fensterelement ein von außen betrachtbares Bild erzeugen, so dass man beispielsweise die Fläche des Fensterelements an dem Gebäude für Werbezwecke nutzen kann. Eine solche Doppelnutzung ist dagegen bei einem Display auf einem additiven Element wie beispielsweise einem Sonnenschutzrollo nicht möglich, da letzteres bei ausgeschaltetem Display nicht transparent ist. Man kann also die bilderzeugende Schicht nur entweder innenseitig oder außenseitig auf das Sonnenschutzrollo bringen und bei heruntergezogenem Rollo nur auf die eine oder andere Weise nutzen. Demgegenüber hat die erfindungsgemäße Lösung einen wesentlichen Vorteil.

Eine bevorzugte Weiterbildung der Erfindung sieht vor, dass das Display eine Zwischenschicht umfasst, die von einem transparenten Zustand auf einen lichtundurchlässigen oder spiegelnden Zustand schaltbar ist. Diese Variante ermöglicht es, beispielsweise von der Innenseite des Fensterelements her ein Bild zu betrachten, welches bei spiegelnd oder lichtundurchlässig geschalteter Zwischenschicht von der Außenseite her nicht sichtbar ist. Schaltet man dagegen die Zwischenschicht auf transparent, könnte man das Bild von der Außenseite her betrachten. Verwendet man beispielsweise zwei solcher Zwischenschichten, kann man wiederum bei nur einem Display in der zuvor geschilderten Weise bei entsprechender Schaltung der Zwischenschichten ein wahlweise entweder von außen oder von innen her betrachtbares Bild erzeugen.

Die Erfindung hat weiterhin den Vorteil, dass man als Träger für die bilderzeugende Schicht (das Display) an sich bekanntes Bauglas nutzen kann. Derartiges Bauglas gibt es in den unterschiedlichsten Varianten mit zusätzlichen Funktionen, die sich beispielsweise aus diversen Beschichtungen ergeben. Zum Beispiel kann es sich um ein Bauglas mit zusätzlichem Sonnenschutz, mit einer Einfärbung oder dergleichen handeln. Ein solches Bauglas nutzt man dann als Träger und bringt auf dieses die entsprechenden Displayschichten auf. Dabei hat man den Vorteil, dass das Ausgangsbauglas kostengünstig erhältlich ist, wobei bereits vorhandene Funktionen für bestimmte Anwendungszwecke genutzt werden können. Die Aufbringung des erfindungsgemäßen Displays kann beispielsweise auf dieses Bauglas durch Aufkleben, beispielsweise einer Folie erfolgen. Man kann aber das Bauglas unmittelbar als Träger nutzen und eine Displayschicht auf dieses anderweitig aufbringen, beispielsweise durch Aufsprühen, Aufdampfen, Aufdrucken (zum Beispiel Siebdruck) oder durch sonstige Beschichtungsverfahren.

Gemäß einer Weiterbildung der Erfindung kann ein erfindungsgemäßes Display, welches als vorgefertigtes flexibles Flachdisplay vorliegt und beispielsweise auf eine Glasschicht aufgebracht wird, selbst einen Kunststoffträger oder einen Glasträger mit einer sehr dünnen Schicht aufweisen. Sehr dünne flexible Glasschichten sind inzwischen erhältlich.

Man kann auch über die Schicht oder die Schichten mit der bilderzeugenden Funktion (Displayschicht) eine oder mehrere Schutzschichten aufbringen, wobei eine solche Schutzschicht eine sehr geringe Schichtdicke haben kann, die hauchdünn sein kann, beispielsweise im Sub-µ-Bereich oder im Nanobereich. Entsprechende Nanoschichten aus geeigneten transparenten Materialien und Methoden zu deren Aufbringung sind bekannt. Wenn man jedoch ein Fensterelement aus Verbundglas verwendet ist es auch möglich, eine solche Schutzschicht einzusparen, da sich die bilderzeugenden Schichten (Displayschichten) dann zwischen zwei Glasschichten befinden können und dadurch ohnehin durch die äußere Glasschicht bereits gegen mögliche Beschädigung, Witterungseinflüsse, Luftfeuchtigkeit etc. geschützt sind.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben. Dabei zeigen
- Fig. 1: einen Schnitt durch ein erfindungsgemäßes Fensterelement gemäß einer ersten Ausführungsvariante der Erfindung;
- Fig. 2: einen Schnitt durch ein Fensterelement gemäß einer zweiten Ausführungsvariante der Erfindung;
- Fig. 3: einen Schnitt durch ein Fensterelement gemäß einer dritten beispielhaften Ausführungsvariante der Erfindung.

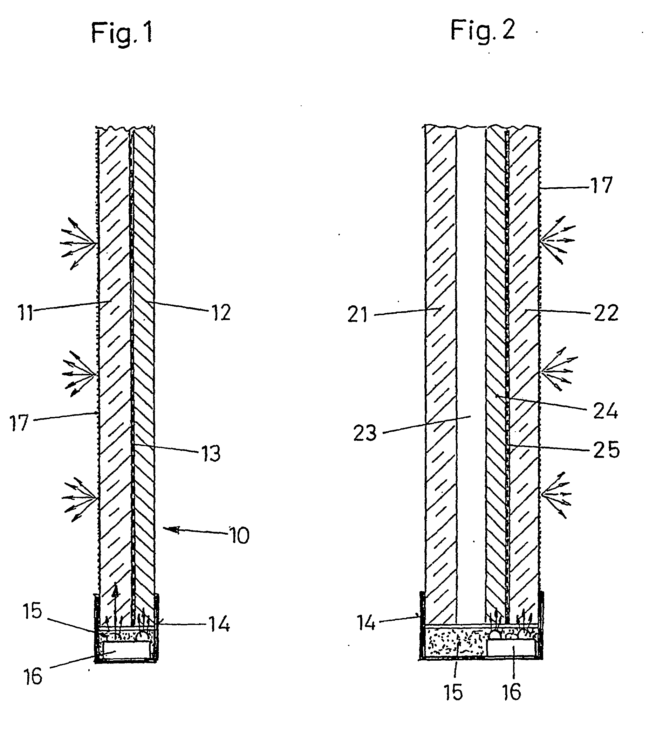

Zunächst wird auf Fig. 1 Bezug genommen. Die Darstellung zeigt ein erfindungsgemäßes Fensterelement 10, welches ein plattenförmiges Element 11 aus Glas oder Kunststoffglas umfasst, auf das ein vor der Aufbringung vorzugsweise flexibles Flachdisplay 12 flächig aufgebracht ist. Das Flachdisplay 12 ist beispielsweise mittels einer Klebeschicht 13 auf eine Fläche des plattenförmigen Elements 11 aufgeklebt. Die Anordnung ist stirnseitig durch ein in etwa U-förmiges Rahmenprofil 14 eingefasst, wobei vor die Stirnseite des plattenförmigen Elements 11 und des Displays 12 als Leuchtmittel eine Leuchtdiode 16, z. B. ein LED oder dergleichen gesetzt ist, wobei das Leuchtmittel 16 in eine im wesentlichen transparente Kunststoffleiste 15 eingegossen sein kann. Das Leuchtmittel 16 gibt sein Licht stirnseitig ab, so dass Licht stirnseitig in das plattenförmige Element 11, d. h., in die Glasscheibe eingestrahlt wird. Da das plattenförmige Element 11 an mindestens einer Fläche, beispielsweise an der Außenfläche in einem Punktraster 17 bedruckt oder geätzt ist, wird das Licht gestreut und verlässt als Streulicht das plattenförmige Element 11 im wesentlichen senkrecht zur Einstrahlrichtung, d. h., das Licht wird über die Fläche des plattenförmigen Elements 11 abgestrahlt, so dass dieses bei eingeschaltetem Leuchtmittel 16 flächig hell erscheint.

Figur 2 zeigt einen Längsschnitt durch ein Fensterelement gemäß einer zweiten alternativen Variante der Erfindung. Das Fensterelement 20 ist in diesem Fall im Prinzip aufgebaut wie eine Isolierglasscheibe mit zwei plattenförmigen Elementen 21, 22 aus Glas oder Kunststoffglas, die voneinander beabstandet sind, so dass sich ein Zwischenraum 23 zwischen diesen ergibt, der in der Regel mit einem Gas befüllt ist. Auf eine Seite eines der beiden plattenförmigen Elemente 22 ist das flexible Flachdisplay 24 aufgebracht, z. B. durch Aufkleben. Die Klebstoffschicht zwischen dem Flachdisplay 24 und dem plattenförmigen Glaselement 22 ist mit 25 bezeichnet. Auch hier ist eines der beiden plattenförmigen Elemente 22 beispielsweise an seiner Oberfläche mit einem Punktraster 17 oder dergleichen bedruckt oder geätzt oder beschichtet. Stirnseitig vor dem plattenförmigen Element 22 und dem Flachdisplay 24 ist ein Leuchtmittel 16 angebracht, welches wiederum in eine transparente Kunststoffleiste 15 eingegossen sein kann. In der Regel werden LED's verwendet, von denen eine Anzahl in einer Reihe hintereinander, d. h., in der Darstellung gemäß Figur 1 bzw. Figur 2 in die Zeichenebene hinein angeordnet ist, so dass das Licht über die Länge der Stirnseite des plattenförmigen Elements eingestrahlt und in diesem geleitet wird, um dann als Streulicht aufgrund des Punktrasters 17 über die Fläche des plattenförmigen Elements 22 nach außen abgegeben zu werden. Diese Isolierglasscheibenanordnung mit den beiden plattenförmigen Elementen 21, 22 und dem Flachdisplay 24 ist wiederum durch beispielsweise ein U-förmiges Rahmenprofil 14 eingefasst, welches auch das Leuchtmittel bzw. die Leuchtmittel 16 nach außen hin abdeckt, so dass nicht unmittelbar die Einsicht auf die Leuchtmittel möglich ist und eine Blendwirkung ausgeschlossen wird. Außerdem wird dadurch der Eindruck der Verwendung diskreter Leuchtmittel vermieden, so dass vielmehr das gesamte plattenförmige Element 22 flächig beleuchtet erscheint.

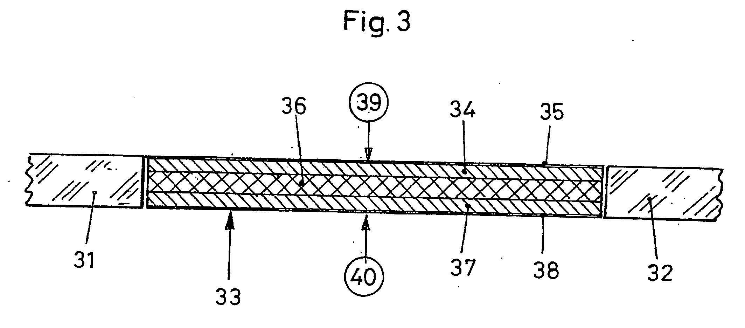

Nachfolgend wird auf Fig. 3 Bezug genommen und anhand dieser Zeichnung wird eine weitere Ausführungsvariante der vorliegenden Erfindung beschrieben. Die Darstellung zeigt beispielhaft einen Schnitt durch einen Ausschnitt durch ein Fensterelement mit bilderzeugenden Schichten. Bei dem Ausführungsbeispiel ist das bilderzeugende Fensterelement, welches insgesamt mit 33 bezeichnet ist beispielsweise in eine gläserne Trennwand eingelassen, wobei das rechts und links angrenzende gewöhnliche Glas der Trennwand mit 31 beziehungsweise 32 bezeichnet ist. Der Bereich des Fensterelements 33 hat beispielsweise einen rechteckigen Umriss und ist bei ausgeschaltetem Display ebenso wie die angrenzenden Bereiche 31, 32 transparent, so dass eine die Trennwand betrachtende Person das als Display ausgebildete Fensterelement 33 im Prinzip gar nicht oder kaum wahrnimmt. Bei eingeschaltetem Display ist es dagegen möglich, Bilder auf dem Bereich des Fensterelements 33 abzubilden, die entweder von der einen oder anderen Seite her betrachtet werden können. Dies soll nachstehend anhand des schichtweisen Aufbaus des Fensterelements 33 näher erläutert werden.

Bei der Trennwand 31, 32, 33 soll es sich beispielsweise um eine Trennwand zwischen zwei Räumen 39, 40 handeln. Das Fensterelement 33 umfasst an der einen Seite eine äußere Schutzschicht 34, die zum Schutz gegen Beschädigung und andere schädliche Einflüsse wie zum Beispiel Luftfeuchtigkeit und so weiter dient. Diese Schutzschicht 34 kann sehr dünn sein und beispielsweise eine Glasschicht oder andere transparente Schicht mit einer Schichtstärke im Nanobereich sein. Unter dieser Schutzschicht 34 befindet sich die eigentliche bilderzeugende Schicht 35, die mehrschichtig aufgebaut sein kann, was jedoch zur Vereinfachung in der Zeichnung nicht dargestellt ist. Auf diese bilderzeugende Schicht 35 folgt eine Zwischenschicht 36, an die sich auf der anderen Seite wieder eine bilderzeugende Schicht 37 anschließt. Schließlich ist auch an der dem Raum 40 zugewandten Seite eine äußere abschließende Schutzschicht 38 vorgesehen, die ähnlich der Schutzschicht 34 auf der dem Raum 39 zugewandten Seite ausgebildet sein kann. Die beiden bilderzeugenden Schichten (Displayschichten) 35, 37 können im Prinzip auch gleichgestaltet sein, wobei wichtig ist, dass bei ausgeschaltetem Display diese Schichten im Wesentlichen transparent sind. Zwischen den beiden bilderzeugenden Schichten 35, 37 befindet sich die Zwischenschicht 36, die in einen ausgeschalteten Zustand bringbar ist, in der sie ebenfalls transparent ist. In einem eingeschalteten Zustand wirkt dagegen die Zwischenschicht 36 entweder als undurchsichtige Schicht oder als Spiegelschicht. Dadurch ist es möglich, auf der einen Seite die bilderzeugende Schicht 35 einzuschalten und ein Bild zu erzeugen, welches zum Raum 39 hin abgestrahlt wird, welches aber wegen der undurchsichtigen oder spiegelnden Zwischenschicht 36 von dem Raum 40 her nicht erkennbar ist. Dadurch ist es auch umgekehrt möglich, die Zwischenschicht 36 undurchsichtig oder spiegelnd zu schalten und ein Bild mittels der bilderzeugenden Schicht 37 zu erzeugen, welches vom Raum 40 her betrachtet werden kann, aber vom Raum 39 her nicht sichtbar ist. Sind beide bilderzeugende Schichten 35, 37 ausgeschaltet, kann die Zwischenschicht 36 auf transparent geschaltet werden und das ganze Fensterelement 33 wird dann transparent und die gläserne Trennwand wirkt wie eine einheitliche Glaswand, in die das Fensterelement 33 integriert ist. Selbstverständlich kann eine solche gläserne Trennwand mehrere der Fensterelemente 33 der zuvor beschriebenen Art aufweisen, so dass gleichzeitig an verschiedenen Stellen verschiedene Bilder erzeugt werden können. Außerdem ist es auch möglich bei lichtdurchlässig oder spiegelnd geschalteter Zwischenschicht 36 gleichzeitig unterschiedliche Bilder von dem Raum 39 und von dem Raum 40 her auf den bilderzeugenden Schichten 35 beziehungsweise 37 zu betrachten.

Alternativ dazu kann man zum Beispiel mit nur einer bilderzeugenden Schicht arbeiten, dafür aber auf diese beidseitig jeweils Zwischenschichten aufbringen. In diesem Fall ist es bei entsprechender Schaltung der Zwischenschichten auf transparent beziehungsweise undurchsichtig oder spiegelnd möglich, auf der einen bilderzeugenden mittleren Schicht ein Bild wahlweise von dem einen Raum 39 oder dem anderen Raum 40 her zu betrachten, wenn man dann jeweils eine Zwischenschicht transparent und die andere Zwischenschicht undurchsichtig schaltet. Bei dieser Variante könnte man aber natürlich anders als zuvor beschrieben nicht gleichzeitig von beiden Räumen her unterschiedliche Bilder betrachten, hätte aber den Vorteil, dass man mit nur einer bilderzeugenden Schicht auskommt.

## Patentansprüche

1. Fensterelement umfassend wenigstens ein mindestens zeitweise lichtdurchlässiges plattenförmiges Element mit wenigstens einer zur Bildwiedergabe bestimmten Fläche (Display), welche Teil des plattenförmigen Elements ist, wobei ein erster Zustand mit eingeschaltetem Display vorgesehen ist und in einem zweiten Zustand bei ausgeschaltetem Display mindestens teilweise eine Durchsicht durch das plattenförmige Element hindurch möglich ist,
wobei das plattenförmige Element wenigstens ein projektorunabhängig bilderzeugendes Display (12, 24) umfasst und in dem ersten Zustand bei eingeschaltetem Display Bildelemente im Display erzeugt werden und die Wiedergabe dieser Bildelemente auf dem plattenförmigen Element erfolgt, **dadurch gekennzeichnet, dass** für das Display (12, 24) lichtemittierende Dioden verwendet werden.

2. Fensterelement nach Anspruch 1, **dadurch gekennzeichnet, dass** als lichtemittierende Dioden LED-Displays, OLED-Displays, Elektrolumineszenz-Displays (ELD), Plasmadisplays (PDP), Vakuumfluoreszenzdisplays (VFD) oder Feldemissionsdisplays (FED) verwendet werden.

3. Fensterelement nach Anspruch 1 oder 2, **dadurch gekennzeichnet, dass** das Display ein auf das plattenförmige Element (11, 22) aufgebrachtes oder in dem plattenförmigen Element untergebrachtes vorzugsweise in sich flexibles Flachdisplay (12, 24) ist.

4. Fensterelement nach Anspruch 1 bis 3 , **dadurch gekennzeichnet, dass** das Display (12, 24) ein im ausgeschalteten Zustand überwiegend transparentes Elektrolumineszenz-Display (ELD) ist.

5. Fensterelement nach einem der Ansprüche 1 bis 4, **dadurch gekennzeichnet, dass** dieses ein Verbundelement mit mehreren plattenförmigen Elementen im Verbund ist.

6. Fensterelement nach einem der Ansprüche 1 bis 5, **dadurch gekennzeichnet, dass** dieses mindestens ein Verbundelement aus mehreren plattenförmigen Elementen umfasst, von denen wenigstens eines eine Glasplatte (11, 21, 22) oder Kunststoffglasplatte ist, in die über Leuchtmittel (16) stirnseitig Licht einstrahlbar ist und von denen wenigstens ein plattenförmiges Element ein Flachdisplay (12, 24) ist.

7. Fensterelement nach einem der Ansprüche 1 bis 6, **dadurch gekennzeichnet, dass** dieses wenigstens ein Verbundelement mit wenigstens zwei weitgehend lichtdurchlässigen plattenförmigen Elementen (21, 22) umfasst, zwischen denen ein Flachdisplay (24) eingebettet ist.

8. Fensterelement nach einem der Ansprüche 1 bis 7, **dadurch gekennzeichnet, dass** dieses eine Beleuchtungseinrichtung mit wenigstens einem Leuchtmittel (16) aufweist, geeignet Licht stirnseitig in das plattenförmige Element (11, 22) hinein einzustrahlen, wobei das plattenförmige Element an seiner Oberfläche oder in seinem Inneren derart lichtstreuend ausgebildet ist, dass das Licht im wesentlichen senkrecht zu seiner Einstrahlrichtung umgelenkt wird und über die Fläche des plattenförmigen Elements mindestens zu einer Seite hin abgegeben wird.

9. Fensterelement nach einem der Ansprüche 1 bis 8, **dadurch gekennzeichnet, dass** dieses wenigstens eine Rahmenkonstruktion (14) umfasst, die ein plattenförmiges Element (11) oder mehrere im Verbund angeordnete plattenförmige Elemente (21, 22) an einem oder mehreren Rändern oder umlaufend randseitig einfasst.

10. Fensterelement nach einem der Ansprüche 1 bis 9, **dadurch gekennzeichnet, dass** die Rahmenkonstruktion (14) die stirnseitig in wenigstens ein plattenförmiges Element einstrahlenden Leuchtmittel (16) in Richtung der Flächennormale der plattenförmigen Elemente (11, 21, 22) gesehen weitgehend abdeckt.

11. Fensterelement nach einem der Ansprüche 1 bis 10, **dadurch gekennzeichnet, dass** dieses weiterhin Steuereinrichtungen für den Betrieb des Displays (12, 24) und/oder für die Steuerung der Leuchtmittel (16), insbesondere eine zeitliche und/oder farbliche Steuerung der Leuchtmittel umfasst.

12. Fensterelement nach einem der Ansprüche 1 bis 11, **dadurch gekennzeichnet, dass** das Display in Form eines flexiblen folienartigen Flachdisplays (12, 24) auf wenigstens ein lichtdurchlässiges und bei eingeschaltetem Leuchtmittel (16) lichtabgebendes plattenförmiges Element (11, 22) aufbringbar, vorzugsweise durch Kleben aufbringbar ist.

13. Fensterelement nach einem der Ansprüche 1 bis 12, **dadurch gekennzeichnet, dass** das Display (35, 37) jeweils eine oder mehrere bilderzeugende Schichten umfasst, die auf eine Trägerschicht aufgebracht, insbesondere aufgesprüht, aufgedampft, aufgedruckt oder durch andere Beschichtungsverfahren aufgebracht wird.

14. Fensterelement nach Anspruch 13, **dadurch gekennzeichnet, dass** die Trägerschicht eine separate Trägerschicht oder eine bereits vorhandene Schicht, vorzugsweise Glasschicht des Fensterelements ist.

15. Fensterelement nach einem der Ansprüche 1 bis 14, **dadurch gekennzeichnet, dass** dieses wenigstens eine Schutzschicht (34, 38) zur Abdeckung der bilderzeugenden Schicht (35, 37) (Displayschicht) umfasst.

16. Fensterelement nach einem der Ansprüche 1 bis 15, **dadurch gekennzeichnet, dass** dieses wenigstens eine Zwischenschicht (36) umfasst, die von einem transparenten Zustand in einen undurchsichtigen oder spiegelnden Zustand umschaltbar ist.

17. Fensterelement nach einem der Ansprüche 1 bis 16, **dadurch gekennzeichnet, dass** dieses wenigstens zwei bilderzeugende Schichten (35, 37) und wenigstens eine dazwischen angeordnete transparente in einen undurchsichtigen oder spiegelnden Zustand umschaltbare Zwischenschicht (36) umfasst.

18. Fensterelement nach einem der Ansprüche 1 bis 17, **dadurch gekennzeichnet, dass** dieses wenigstens eine bilderzeugende Schicht und wenigstens zwei beidseitig von dieser angeordnete transparente in einen undurchsichtigen oder spiegelnden Zustand umschaltbare Zwischenschichten umfasst.

19. Fensterelement nach einem der Ansprüche 1 bis 18, **dadurch gekennzeichnet, dass** als Trägerschicht für eine bilderzeugende Schicht eine Glasschicht oder Acrylglasschicht dient, die gegebenenfalls eine zusätzliche funktionelle Beschichtung, insbesondere Sonnenschutzbeschichtung und/oder Einfärbung aufweist.

20. Fassade, Wand, Decke, Dach, Trennwand, Treppe, Tür, Aufzug, Geländer, Rolltreppe oder Laufband eines Gebäudes, **dadurch gekennzeichnet, dass** diese(s) wenigstens ein Fensterelement gemäß einem der Ansprüche 1 bis 19 umfasst.

21. Möbelstück, Stadtraummöbel oder Gartenmöbel, **dadurch gekennzeichnet, dass** dieses wenigstens ein Fensterelement gemäß einem der Ansprüche 1 bis 19 umfasst.

## Claims

1. Window element comprising at least one at least temporarily transparent plate-shaped element, having at least one surface (display) which is intended for image reproduction and is part of the plate-shaped element, a first state with the display switched on being provided, and a view through the plate-shaped element being possible in a second state with the display switched off, the plate-shaped element comprising at least one image-generating display (12, 24) independent of a projector, and pixels being generated in the display in the first state with the display switched on, and the reproduction of these pixels being performed on the plate-shaped element, **characterized in that** light-emitting diodes are used for the display (12, 24).

2. Window element according to Claim 1, **characterized in that** LED displays, OLED displays, electroluminescent displays (ELD), plasma displays (PDP), vacuum fluorescent displays (VFD) or field emission displays (FED) are used as light-emitting diodes.

3. Window element according to Claim 1 or 2, **characterized in that** the display is a preferably inherently flexible flat display (12, 24) mounted on the plate-shaped element (11, 22) or accommodated in the plate-shaped element.

4. Window element according to Claims 1 to 3, **characterized in that** the display (12, 24) is an electroluminescent display (ELD) which is predominantly transparent in the switched-off state.

5. Window element according to one of Claims 1 to 4, **characterized in that** the said element is a composite element with a number of plate-shaped elements in the composite.

6. Window element according to one of Claims 1 to 5, **characterized in that** the said element comprises at least one composite element made from a number of plate-shaped elements of which at least one is a glass plate (11, 21, 22) or plastic glass plate into which light can be irradiated via luminous means (16) at the end face, and of which at least one plate-shaped element is a flat display (12, 24).

7. Window element according to one of Claims 1 to 6, **characterized in that** the said element comprises at least one composite element with at least two largely transparent plate-shaped elements (21, 22) between which a flat display (24) is embedded.

8. Window element according to one of Claims 1 to 7, **characterized in that** the said element has an illuminating device with at least one luminous means (16), suitable for irradiating light into the end face of the plate-shaped element (11, 22), the plate-shaped element being designed to scatter light at its surface or in its interior in such a way that the light is deflected substantially perpendicular to its direction of irradiation and is emitted at least to one side via the surface of the plate-shaped element.

9. Window element according to one of Claims 1 to 8, **characterized in that** the said element comprises at least one frame structure (14) which mounts a plate-shaped element (11) or a number of plate-shaped elements (21, 22) arranged in the composite, at one or more edges or in a fashion running around the edge.

10. Window element according to one of Claims 1 to 9, **characterized in that**, seen in the direction of the surface normal to the plate-shaped elements (11, 21, 22), the frame structure (14) largely covers the luminous means (16) irradiating the end face of at least one plate-shaped element.

11. Window element according to one of Claims 1 to 10, **characterized in that** the said element further comprises control devices for operating the display (12, 24) and/or for controlling the luminous means (16), in particular a temporal and/or colour control of the luminous means.

12. Window element according to one of Claims 1 to 11, **characterized in that** the display can be mounted in the form of a flexible film-like flat display (12, 24), preferably by bonding, on at least one transparent plate-shaped element (11, 22) which emits light with the luminous means (16) switched on.

13. Window element according to one of Claims 1 to 12, **characterized in that** the display (35, 37) in each case comprises one or more image-generating layers which are applied to a carrier layer, in particular sprayed on, vapour deposited, printed on or applied by other coating methods.

14. Window element according to Claim 13, **characterized in that** the carrier layer is a separate carrier layer or an already present layer, preferably a glass layer of the window element.

15. Window element according to one of Claims 1 to 14, **characterized in that** the said element comprises at least one protective layer (34, 38) for covering the image-generating layer (35, 37) (display layer).

16. Window element according to one of Claims 1 to 15, **characterized in that** the said element comprises at least one intermediate layer (36) which can be switched over from a transparent state into an opaque or reflecting state.

17. Window element according to one of Claims 1 to 16, **characterized in that** the said element comprises at least two image-generating layers (35, 37) and at least one transparent intermediate layer (36) which is arranged therebetween and can be switched over into an opaque or reflecting state.

18. Window element according to one of Claims 1 to 17, **characterized in that** the said element comprises at least one image-generating layer and at least two transparent intermediate layers which are arranged on both sides thereof and can be switched over into an opaque or reflecting state.

19. Window element according to one of Claims 1 to 18, **characterized in that**, serving as carrier layer for an image-generating layer is a glass layer or acrylic glass layer which, if appropriate, has an additional functional coating, in particular a sun-protection coating and/or colouring.

20. Façade, wall, ceiling, roof, partition, staircase, door, lift, banisters, escalator or moving belt of a building, **characterized in that** this (these) comprise(s) at least one window element in accordance with one of Claims 1 to 19.

21. Piece of furniture, urban furniture or garden furniture, **characterized in that** this comprises at least one window element in accordance with one of Claims 1 to 19.

## Revendications

1. Elément de fenêtre comprenant au moins un élément en forme de plaque au moins temporairement perméable à la lumière, comprenant au moins une surface prévue pour restituer des images (affichage), qui fait partie de l'élément en forme de plaque, un premier état avec l'affichage enclenché étant prévu et dans un deuxième état, avec l'affichage déconnecté, une vision à travers l'élément en forme de plaque étant possible au moins en partie,
l'élément en forme de plaque comprenant au moins un affichage (12, 24) produisant une image indépendamment d'un projecteur et dans le premier état avec l'affichage enclenché, des éléments d'image étant produits dans l'affichage et la restitution de ces éléments d'image s'effectuant sur l'élément en forme de plaque, **caractérisé en ce que** l'on utilise des diodes électroluminescentes pour l'affichage (12, 24).

2. Elément de fenêtre selon la revendication 1, **caractérisé en ce que** l'on utilise comme diodes électroluminescentes des affichages à DEL, des affichages à DELO, des affichages à électroluminescence (AEL), des affichages à plasma (AP), des affichages à fluorescence sous vide (AFV) ou des affichages à émission par effet de champ (AEEC).

3. Elément de fenêtre selon la revendication 1 ou 2, **caractérisé en ce que** l'affichage est un affichage plat de préférence flexible en soi (12, 24) monté sur l'élément en forme de plaque (11, 22) ou dans l'élément en forme de plaque.

4. Elément de fenêtre selon la revendication 1 à 3, **caractérisé en ce que** l'affichage (12, 24) est un affichage à électroluminescence (AEL) essentiellement transparent dans l'état déconnecté.

5. Elément de fenêtre selon l'une quelconque des revendications 1 à 4, **caractérisé en ce que** celui-ci est un élément composite en liaison avec plusieurs éléments en forme de plaque.

6. Elément de fenêtre selon l'une quelconque des revendications 1 à 5, **caractérisé en ce que** celui-ci comprend au moins un élément composite constitué de plusieurs éléments en forme de plaque, dont au moins un est une plaque de verre (11, 21, 22) ou une plaque de verre artificiel, dans laquelle de la lumière peut être irradiée du côté frontal par le biais de moyens d'éclairage (16) et dont au moins un élément en forme de plaque est un affichage plat (12, 24).

7. Elément de fenêtre selon l'une quelconque des revendications 1 à 6, **caractérisé en ce que** celui-ci comprend au moins un élément composite avec au moins deux éléments en forme de plaque (21, 22) essentiellement perméables à la lumière, entre lesquels est intégré un affichage plat (24).

8. Elément de fenêtre selon l'une quelconque des revendications 1 à 7, **caractérisé en ce que** celui-ci présente un dispositif d'éclairage avec au moins un moyen d'éclairage (16) approprié pour irradier de la lumière du côté frontal dans l'élément en forme de plaque (11, 22), l'élément en forme de plaque étant réalisé sur sa surface ou à l'intérieur de manière à disperser la lumière de telle sorte que la lumière soit essentiellement déviée perpendiculairement à sa direction d'incidence, et soit diffusée sur la surface de l'élément en forme de plaque au moins vers un côté.

9. Elément de fenêtre selon l'une quelconque des revendications 1 à 8, **caractérisé en ce que** celui-ci comprend au moins une construction de cadre (14), qui borde un élément en forme de plaque (11) ou plusieurs éléments en forme de plaque (21, 22) disposés en un assemblage au niveau d'un ou de plusieurs bords ou tout autour du côté des bords.

10. Elément de fenêtre selon l'une quelconque des revendications 1 à 9, **caractérisé en ce que** la construction de cadre (14) recouvre essentiellement les moyens d'éclairage (16) diffusant du côté frontal dans au moins un élément en forme de plaque, vu dans la direction de la normale à la surface des éléments en forme de plaque (11 ; 21, 22).

11. Elément de fenêtre selon l'une quelconque des revendications 1 à 10, **caractérisé en ce que** celui-ci comprend en outre des dispositifs de commande pour le fonctionnement de l'affichage (12, 24) et/ou pour la commande des moyens d'éclairage (16), en particulier une commande temporelle et/ou par couleurs des moyens d'éclairage.

12. Elément de fenêtre selon l'une quelconque des revendications 1 à 11, **caractérisé en ce que** l'affichage peut être appliqué sous forme d'un affichage plat (12, 24) en forme de feuille flexible sur au moins un élément en forme de plaque (11, 22) perméable à la lumière et diffusant de la lumière lorsque le moyen d'éclairage (16) est enclenché, de préférence peut être appliqué par collage.

13. Elément de fenêtre selon l'une quelconque des revendications 1 à 12, **caractérisé en ce que** l'affichage (35, 37) comprend à chaque fois une ou plusieurs couches produisant des images, qui est appliquée sur une couche porteuse, notamment par pulvérisation, vaporisation, impression ou par d'autres procédés de revêtement.

14. Elément de fenêtre selon la revendication 13, **caractérisé en ce que** la couche porteuse est une couche porteuse séparée ou une couche déjà existante, de préférence une couche de verre de l'élément de fenêtre.

15. Elément de fenêtre selon l'une quelconque des revendications 1 à 14, **caractérisé en ce que** celui-ci comprend au moins une couche protectrice (34, 38) pour recouvrir la couche produisant des images (35, 37) (couche d'affichage).

16. Elément de fenêtre selon l'une quelconque des revendications 1 à 15, **caractérisé en ce que** celui-ci comprend au moins une couche intermédiaire (36) qui peut être commutée d'un état transparent dans un état non transparent ou réfléchissant.

17. Elément de fenêtre selon l'une quelconque des revendications 1 à 16, **caractérisé en ce que** celui-ci comprend au moins deux couches produisant des images (35, 37) et au moins une couche intermédiaire (36) transparente disposée entre elles pouvant être commutée dans un état non transparent ou réfléchissant.

18. Elément de fenêtre selon l'une quelconque des revendications 1 à 17, **caractérisé en ce que** celui-ci comprend au moins une couche produisant des images et au moins deux couches intermédiaires transparentes disposées des deux côtés de celle-ci pouvant être commutées dans un état non transparent ou réfléchissant.

19. Elément de fenêtre selon l'une quelconque des revendications 1 à 18, **caractérisé en ce que** l'on utilise comme couche porteuse pour une couche produisant des images une couche de verre ou une couche de verre acrylique qui présente éventuellement un revêtement fonctionnel supplémentaire, notamment un revêtement de protection contre le soleil et/ou une coloration.

20. Façade, mur, plafond, toit, cloison, escalier, porte, ascenseur, palier, escalier roulant ou bande de roulement d'un bâtiment, **caractérisé(e) en ce que** celui-ci ou celle-ci comprend au moins un élément de fenêtre selon l'une quelconque des revendications 1 à 19.

21. Elément de mobilier, mobilier urbain ou meuble de jardin, **caractérisé en ce que** celui-ci comprend au moins un élément de fenêtre selon l'une quelconque des revendications 1 à 19.
